# EUROPEAN PATENT SPECIFICATION

(11) **EP 4 561 032 B1**
(45) Date of publication and mention of the grant of the patent: **11.11.2026**
(21) Application number: 23870288.0
(22) Date of filing: 11.09.2023
(51) Int. Cl.: H04M 1/02, G06F 1/16

(54) **MOBILE TERMINAL**
MOBILES ENDGERÄT
TERMINAL MOBILE

(30) Priority: 30.09.2022 CN 202211208965
(43) Date of publication of application: 28.05.2025
(73) Proprietor: Huawei Technologies Co., Ltd., Shenzhen, Guangdong 518129 (CN)
(72) Inventor: ZHANG, Yunti, Shenzhen, Guangdong 518129 (CN); WANG, Tao, Shenzhen, Guangdong 518129 (CN)
(74) Representative: Pfenning, Meinig & Partner mbB
(86) International application number: PCT/CN2023/118068
(87) International publication number: WO 2024/067049

(56) References cited:
- WO-A1-2022/119292
- CN-A- 110 266 843
- CN-A- 113 949 751
- CN-A- 114 171 898
- CN-U- 209 949 164
- US-A1- 2020 267 839

## Description

### TECHNICAL FIELD

This application relates to the field of display technologies, and in particular, to a mobile terminal.

### BACKGROUND

With gradual maturation of flexible foldable display technologies, foldable terminals have been widely used in people's life. A foldable mobile phone is used as an example. In a folded state, the foldable mobile phone has a small size, and is convenient for a user to carry. In an unfolded state, a flexible display of the foldable mobile phone can be unfolded, to provide a large display area.

In a related technology, the foldable mobile phone may include a first housing, a second housing, a hinge mechanism, a main unit assembly, a power supply assembly, a flexible display, and a flexible circuit board (Flexible Printed Circuit, FPC). The first housing and the second housing are respectively connected to two sides of the hinge mechanism. The flexible display is mounted on the first housing and the second housing, and can be folded or unfolded via the hinge mechanism. The main unit assembly is disposed in the first housing, and the power supply assembly is disposed in the second housing. One end of the FPC is connected to the main unit assembly, and the other end of the FPC passes through the hinge mechanism and is connected to the flexible display and the power supply assembly, to implement electrical signal communication of the foldable mobile phone. However, because the FPC integrates a screen transmission signal and a power supply transmission signal, the FPC has a large quantity of signal channels and is complex. This leads to high manufacturing costs of the FPC. US 2020/267839 A1, CN 113 949 751 A and CN 110 266 843 A describe foldable mobile phones using FPCs.

### SUMMARY

This application provides a mobile terminal, to simplify a structure of a signal transmission line, thereby reducing manufacturing costs of the mobile terminal.

The invention is directed to the subject-matter of the independent claim. Advantageous embodiments are set out in the dependent claims.

According to a first aspect, this application provides a mobile terminal. The mobile terminal includes a hinge assembly, a flexible foldable display, a first body, and a second body. Specifically, the first body and the second body are rotatably connected to the hinge assembly separately, and the first body and the second body are located on two sides of the hinge assembly. The flexible foldable display may include a first display and a second display. The first body may include a first housing, a primary circuit board, a camera module, and a first signal transmission line. The first housing may be connected to the first display. The primary circuit board is provided with a central processing unit (Central Processing Unit, CPU), the camera module is electrically connected to the primary circuit board, and the first display is provided with a first camera hole corresponding to the camera module. The first display may be electrically connected to the primary circuit board through the first signal transmission line. The second body may include a second housing, a secondary circuit board, a battery, and a second signal transmission line. The second housing may be connected to the second display. The secondary circuit board is provided with a speaker module. One end of the second signal transmission line is electrically connected to the battery, and the other end of the second transmission line passes through the hinge assembly and is electrically connected to the primary circuit board.

In the mobile terminal with the foregoing structure, the first signal transmission line, the primary circuit board, and the central processing unit are disposed on a same side of the hinge assembly, so that signal transmission of the flexible foldable display can be completed in the first body. In this way, in this structural design, the first signal transmission line does not need to pass through the hinge assembly, and only the second signal transmission line needs to pass through the hinge assembly. Therefore, a structure of the first signal transmission line can be simplified, and manufacturing costs of the mobile terminal can be reduced.

The flexible foldable display may have a first outer edge and a second outer edge, where the first outer edge is perpendicular to the hinge assembly, and the second outer edge is parallel to the hinge assembly. In some technical solutions, a ratio of a length of the first outer edge to a length of the second outer edge is greater than 2:1. In other words, when the mobile terminal is used, a user may hold the mobile terminal in a direction in which the second outer edge is close to a body of the user. In this case, the mobile terminal may be folded up and down.

In addition to the central processing unit, the primary circuit board may be further provided with a memory and a radio frequency module. In this application, the primary circuit board may be configured to process a display signal, a radio frequency signal, storage data, and the like, of the mobile terminal.

A side of the first display is provided with a terminal bending portion. The terminal bending portion is bent toward the primary circuit board. When the first display is connected to the primary circuit board, one end of the first signal transmission line is electrically connected to the terminal bending portion, and the other end of the first signal transmission line is electrically connected to the primary circuit board. The terminal bending portion is configured to connect the first display to the first signal transmission line, so that the first display can be electrically connected to the primary circuit board.

In this application, the first display has a first side away from the second display, and two second sides that are separately adjacent to the first side. In some technical solutions, the terminal bending portion may be disposed on the first side of the first display, and the first camera hole may be provided close to the second side of the first display. In this technical solution, the terminal bending portion and the first camera hole are not on a same side of the first display. In other words, the terminal bending portion is not adjacent to the first camera hole. In this case, the terminal bending portion does not need to avoid the camera module, so that a structural design of the flexible foldable display is simplified.

In the foregoing mobile terminal, the terminal bending portion may be a bar-shaped bending portion. The bar-shaped bending portion is connected to at least a part of the first side. Specifically, the bar-shaped bending portion may be connected to a part of the first side, or the bar-shaped bending portion may be connected to the entire first side. Therefore, a size of the bar-shaped bending portion along the first side may be designed according to an actual requirement.

In some other technical solutions, the terminal bending portion may be disposed on the first side of the first display, and the first camera hole may be provided close to the first side of the first display. In some other technical solutions, the terminal bending portion may alternatively be disposed on the second side of the first display, and the first camera hole may be provided close to the second side of the first display. In other words, the terminal bending portion and the first camera hole may be disposed on a same side of the first display, to fully use side space of the first display, thereby facilitating miniaturization of the mobile terminal.

In the foregoing mobile terminal, when a length of the terminal bending portion extends to the entire side of the first display, the terminal bending portion may be provided with a second camera hole, and the second camera hole is provided corresponding to the first camera hole, so that an optical axis of a lens passes through the first camera hole and the second camera hole, to implement an image shooting function of the mobile terminal.

In this application, the mobile terminal may further include a display chip, and the display chip is configured to process a signal of a flexible foldable display. Specifically, a position of the display chip is not limited. For example, the display chip may be disposed on the primary circuit board; or the display chip may be disposed on the terminal bending portion, to fully use space of the terminal bending portion.

In the technical solutions of this application, types of the first signal transmission line and the second signal transmission line are not specifically limited. For example, the first signal transmission line may be a flexible circuit board or a flexible cable. The second signal transmission line may be a flexible circuit board or a flexible cable.

### BRIEF DESCRIPTION OF DRAWINGS

FIG. 1 is a diagram of a structure of a mobile terminal according to an embodiment of this application;
FIG. 2 is another diagram of a structure of a mobile terminal according to an embodiment of this application;
FIG. 3 is a diagram of a structure of a flexible foldable display according to an embodiment of this application;
FIG. 4 is a main view of the flexible foldable display in FIG. 3;
FIG. 5 is another diagram of a structure of a flexible foldable display according to an embodiment of this application;
FIG. 6 is another diagram of a structure of a flexible foldable display according to an embodiment of this application;
FIG. 7 is a side view of the flexible foldable display in FIG. 6;
FIG. 8 is another diagram of a structure of a flexible foldable display according to an embodiment of this application;
FIG. 9 is another diagram of a structure of a flexible foldable display according to an embodiment of this application; and
FIG. 10 is a side view of the flexible foldable display in FIG. 9.

Reference numerals:
10: mobile terminal;
11: first body;
12: second body;
13: hinge assembly;
14: flexible foldable display;
15: display chip;
110: first accommodating space;
111: first housing;
112: primary circuit board;
113: first signal transmission line;
114: camera module;
120: second accommodating space;
121: second housing;
122: battery;
123: second signal transmission line;
141: first display;
142: second display;
1411: first camera hole;
1412: terminal bending portion; and
1421: second camera hole.

### DESCRIPTION OF EMBODIMENTS

To make the objectives, technical solutions, and advantages of this application clearer, the following further describes this application in detail with reference to the accompanying drawings.

Reference to "an embodiment", "some embodiments", or the like described in this specification indicates that one or more embodiments of this application include a specific feature, structure, or characteristic described with reference to the embodiment. Therefore, statements such as "in an embodiment", "in another embodiment", "in some embodiments", "in some other embodiments", or "in other embodiments" that appear at different places in this specification do not necessarily mean reference to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include plural forms like "one or more", unless otherwise specified in the context clearly.

This application provides a mobile terminal, to simplify a structure of a signal transmission line, thereby reducing manufacturing costs of the mobile terminal.

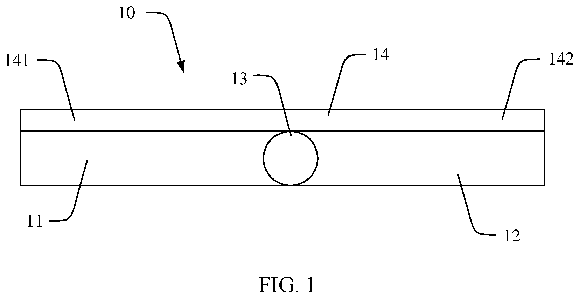

FIG. 1 is a diagram of a structure of a mobile terminal according to an embodiment of this application. As shown in FIG. 1, the mobile terminal 10 may include a first body 11, a second body 12, a hinge assembly 13, and a foldable display. The first body 11 and the second body 12 are rotatably connected to two sides of the hinge assembly 13 separately. The foldable display may be a flexible foldable display 14, and the flexible foldable display 14 may specifically include two parts, namely, a first display 141 and a second display 142. Alternatively, the foldable display may include two hard displays that are independently disposed, namely, a first hard display and a second hard display. The flexible foldable display 14 is used as an example below for description. The flexible foldable display 14 is connected to the first body 11 and the second body 12, where the first display 141 and the first body 11 are correspondingly disposed, and the second display 142 and the second body 12 are correspondingly disposed. The hinge assembly 13 is configured to enable the first body 11 and the second body 12 to rotate toward each other, so that the first display 141 and the second display 142 are folded, to implement folding of the flexible foldable display 14. In addition, the hinge assembly 13 is further configured to enable the first body 11 and the second body 12 to rotate away from each other, so that the first display 141 and the second display 142 are unfolded, to implement unfolding of the flexible foldable display 14. The mobile terminal 10 in this application may be internally folded. That is, when the mobile terminal 10 is in a folded state, the first display 141 and the second display 142 are folded toward each other. In other words, after being folded, the first display 141 and the second display 142 do not display a picture. Alternatively, the mobile terminal 10 in this application may be externally folded. That is, when the mobile terminal 10 is in a folded state, the first display 141 and the second display 142 are folded away from each other. In other words, after being folded, the first display 141 and the second display 142 may display a picture. In addition, the mobile terminal 10 may be folded up and down, or folded left and right.

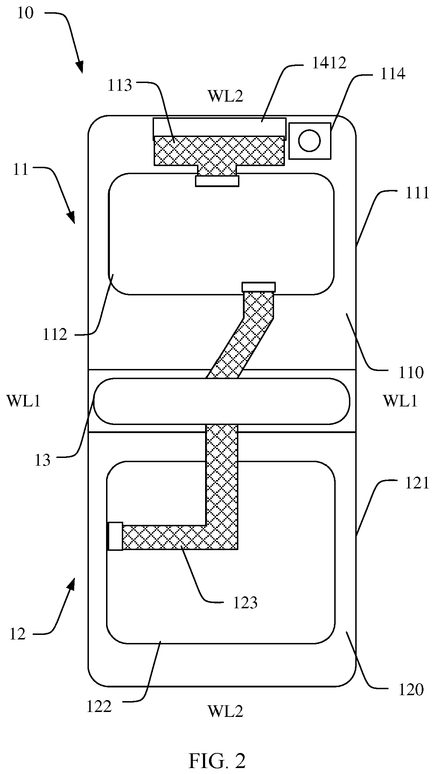

FIG. 2 is another diagram of the structure of the mobile terminal according to an embodiment of this application. As shown in FIG. 2, the mobile terminal 10 that is folded up and down is used as an example. The first body 11 may specifically include a first housing 111, a primary circuit board 112, a camera module 114, and a first signal transmission line 113. The second body 12 may specifically include a second housing 121, a secondary circuit board (not shown in the figure), a battery 122, and a second signal transmission line 123. The hinge assembly 13 is rotatably connected between the first housing 111 and the second housing 121. Specifically, the first housing 111 may be connected to the first display 141, to form first accommodating space 110. The first accommodating space 110 may accommodate the primary circuit board 112, the camera module 114, and the first signal transmission line 113. In the first accommodating space 110, the primary circuit board 112 is provided with a central processing unit, and the primary circuit board 112 is electrically connected to the central processing unit. The camera module 114 is electrically connected to the primary circuit board 112, and the first display 141 is provided with a first camera hole. The first camera hole 1411 is provided corresponding to a lens of the camera module 114, so that an optical axis of the lens passes through the first camera hole 1411, to implement an image shooting function of the mobile terminal 10. The first display 141 is electrically connected to the primary circuit board 112 through the first signal transmission line 113. It should be noted that, in the first body 11, the central processing unit may be disposed on the primary circuit board 112. Certainly, in some other embodiments, the central processing unit may alternatively be disposed on another position in the first housing 111. This is not specifically limited herein. The central processing unit is configured to: process a signal of the mobile terminal 10 and run a program. In addition, the second housing 121 may be connected to the second display 142, to form second accommodating space 120. The second accommodating space 120 may accommodate the secondary circuit board, the battery 122, and the second signal transmission line 123. The secondary circuit board is provided with a speaker module, which may be configured to process audio data of the mobile terminal 10. The battery 122 is electrically connected to the primary circuit board 112 through the second signal transmission line 123. Specifically, one end of the second signal transmission line 123 is connected to the battery 122, and the other end of the second signal transmission line 123 passes through the hinge assembly and is connected to the primary circuit board 112.

In the mobile terminal 10 in this application, the first signal transmission line 113, the primary circuit board 112, and the central processing unit are disposed in the first accommodating space 110 of the first body 11, that is, disposed on a same side of the hinge assembly 13, so that signal transmission of the flexible foldable display 14 can be completed in the first body 11, and the first signal transmission line 113 does not need to pass through the hinge assembly 13. In this way, a structural design of the first signal transmission line 113 can be simplified, and manufacturing costs of the mobile terminal 10 are further reduced.

In addition to the central processing unit, the primary circuit board 112 may be further provided with a memory and a radio frequency module. The primary circuit board 112 may be configured to process a display signal, a radio frequency signal, storage data, and the like, of the mobile terminal 10. In addition, a battery may also be disposed in the first body 11, and the battery may be electrically connected to the primary circuit board 112 through a signal transmission line. The secondary circuit board may further be provided with an audio chip, a vibration module, and the like.

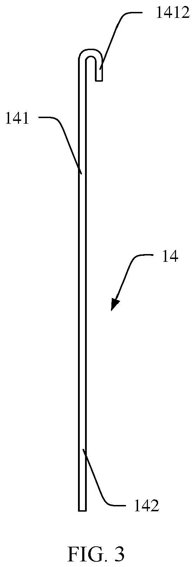

FIG. 3 is a diagram of a structure of the flexible foldable display according to an embodiment of this application. As shown in FIG. 3, the flexible foldable display 14 is a display that is folded up and down. During specific disposing, a side of the first display 141 may be provided with a terminal bending portion 1412. The terminal bending portion 1412 can be bent toward the primary circuit board 112. When the first display 141 is connected to the primary circuit board 112, one end of the first signal transmission line 113 is electrically connected to the terminal bending portion 1412, and the other end of the first signal transmission line 113 is electrically connected to the primary circuit board 112. The terminal bending portion 1412 is configured to connect the first display 141 to the first signal transmission line 113, so that the first display 141 can be electrically connected to the primary circuit board 112 and the central processing unit.

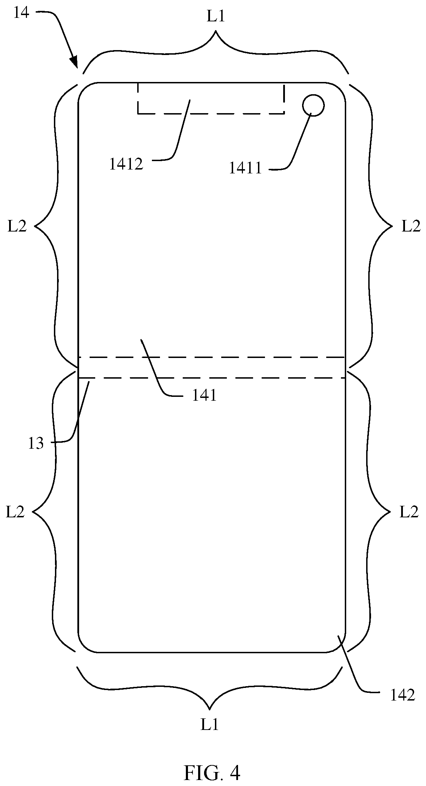

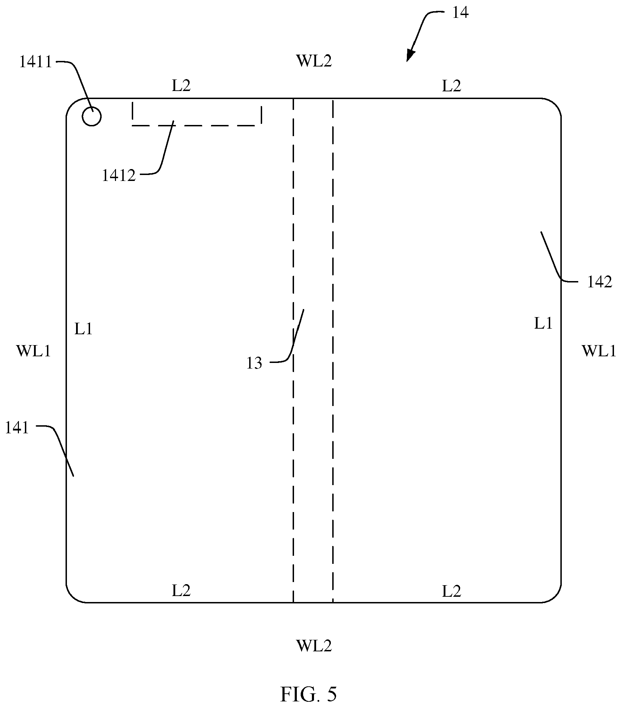

FIG. 4 is a main view of the flexible foldable display in FIG. 3. As shown in FIG. 4, the first display 141 has a first side L1 away from the second display 142 and two second sides L2 that are separately adjacent to the first side L1. In an embodiment, the terminal bending portion 1412 may be disposed on the first side L1 of the first display 141, and the first camera hole 1411 may be provided close to the first side L1. FIG. 5 is another diagram of the structure of the flexible foldable display according to an embodiment of this application. As shown in FIG. 5, the flexible foldable display 14 is a display that is folded left and right. The terminal bending portion 1412 may be disposed on the second side L2 of the first display 141, and the first camera hole 1411 may be provided close to the second side L2. In the foregoing embodiment, the terminal bending portion 1412 and the first camera hole 1411 are both disposed on the first side L1 of the first display 141, or are both disposed on the second side L2 of the first display 141, to fully use side space of the first display 141. This facilitates miniaturization of the mobile terminal 10.

Still refer to FIG. 2, FIG. 4, and FIG. 5. Up-down folding and left-right folding are described below.

As shown in FIG. 2 and FIG. 5, the flexible foldable display 14 may have first outer edges WL1 and second outer edges WL2. The first outer edge WL1 is perpendicular to the hinge assembly 13, and the second outer edge WL2 is parallel to the hinge assembly 13. The first display 141 has a first side L1 away from the second display 142, and two second sides L2 that are separately adjacent to the first side L1. Similarly, the second display 142 has a first side L1 away from the first display 141, and two second sides L2 that are separately adjacent to the first side L1.

As shown in FIG. 2 and FIG. 4, in some embodiments, a ratio of a length of the first outer edge WL1 to a length of the second outer edge WL2 is greater than 2:1. In this case, the mobile terminal 10 is folded up and down. The first side L1 of the first display 141 and the first side L1 of the second display 142 may be respectively used as the second outer edges WL2 of the flexible foldable display 14. The second side L2 of the first display 141 and the second side L2 of the adjacent second display 142 are jointly used as the first outer edges WL1 of the flexible foldable display 14. When the mobile terminal 10 is in an unfolded state, the camera module 114 and the speaker module are located on two opposite sides of the mobile terminal 10. That is, the camera module 114 is disposed close to the first side L1 (namely, one second outer edge WL2) of the first body 11, and the speaker module is disposed close to the first side L1 (namely, the other second outer edge WL2) of the second body 12. When the mobile terminal 10 is folded along the hinge assembly 13, the camera module 114 gradually approaches the speaker module. When the mobile terminal 10 is in a folded state, the camera module 114 and the speaker module are adjacent to each other and are located on a same side of the mobile terminal 10. Specifically, the ratio of the length of the first outer edge WL1 to the length of the second outer edge WL2 may be 19:9, 21:9, 22:9, or the like. This is not specifically limited herein.

Certainly, in some other embodiments, the ratio of the length of the first outer edge WL1 to the length of the second outer edge WL2 may alternatively be greater than 1:1 and less than 2:1. As shown in FIG. 5, in this case, the mobile terminal 10 may be folded left and right. The first side L1 of the first display 141 and the first side L1 of the second display 142 may be respectively used as the first outer edges WL1 of the flexible foldable display 14. The second side L2 of the first display 141 and the second side L2 of the adjacent second display 142 are jointly used as the second outer edges WL2 of the flexible foldable display 14. When the mobile terminal 10 is in the unfolded state and the folded state, the camera module 114 and the speaker module are located on two opposite sides of the mobile terminal 10. That is, the camera module 114 may be disposed on one second side L2 of the first body 11, and the speaker module may be disposed on the other second side L2 of the first body 11. Alternatively, the camera module 114 may be disposed on the second side L2 that is of the first body 11 and that is located on one second outer edge WL2, and the speaker module may be disposed on the second side L2 that is of the second body 12 and that is located on the other second outer edge WL2. Alternatively, the camera module 114 may be disposed on one second side L2 of the second body 12, and the speaker module may be disposed on the other second side L2 of the second body 12. Specifically, the ratio of the length of the first outer edge WL1 to the length of the second outer edge WL2 may be 8:6.9, 8:7, 8:7.1, or the like. This is not specifically limited herein.

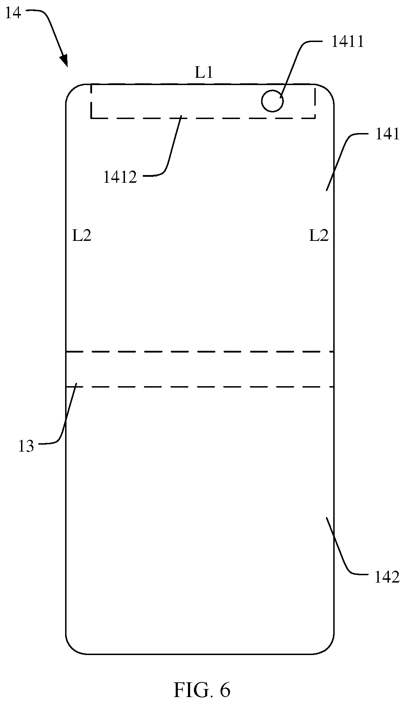

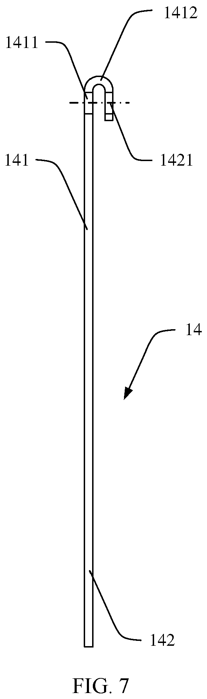

FIG. 6 is another diagram of the structure of the flexible foldable display according to an embodiment of this application. FIG. 7 is a side view of the flexible foldable display in FIG. 6. As shown in FIG. 6 and FIG. 7, the flexible foldable display 14 is a display that is folded up and down. In the foregoing mobile terminal 10, when a length of the terminal bending portion 1412 extends to the entire side of the first display 141, the terminal bending portion 1412 may be provided with a second camera hole 1421, and the second camera hole 1421 is provided corresponding to the first camera hole 1411, so that an optical axis of a lens passes through the first camera hole 1411 and the second camera hole 1421, to implement an image shooting function of the mobile terminal 10.

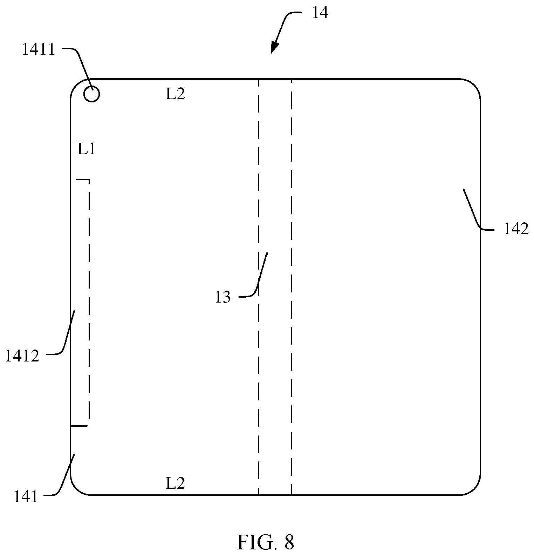

FIG. 8 is another diagram of the structure of the flexible foldable display according to an embodiment of this application. As shown in FIG. 8, in an embodiment, the flexible foldable display 14 is a display that is folded left and right. The terminal bending portion 1412 is disposed on the first side L1 of the first display 141, and the first camera hole 1411 is provided close to the second side L2 of the first display 141. In this design, the terminal bending portion 1412 and the first camera hole 1411 are not on a same side of the first display 141. In other words, the terminal bending portion 1412 is not adjacent to the first camera hole 1411. In this case, the terminal bending portion 1412 does not need to avoid the camera module 114, simplifying a structure of the flexible foldable display 14.

In the foregoing mobile terminal 10, the terminal bending portion 1412 may be a bar-shaped bending portion. The bar-shaped bending portion is connected to at least a part of the first side L1 of the first display 141. Specifically, the bar-shaped bending portion may be connected to a part of the first side L1, or the bar-shaped bending portion may be connected to the entire first side L1. Therefore, a size of the bar-shaped bending portion along the first side L1 may be designed according to an actual requirement.

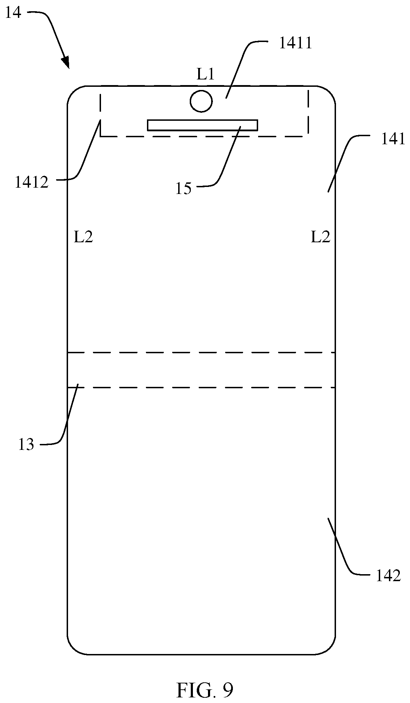

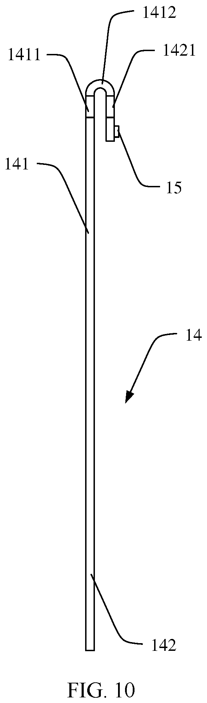

FIG. 9 is another diagram of the structure of the flexible foldable display according to an embodiment of this application. FIG. 10 is a side view of the flexible foldable display in FIG. 9. As shown in FIG. 9 and FIG. 10, the flexible foldable display 14 is a display that is folded up and down. The mobile terminal 10 may further include a display chip 15, and the display chip 15 is configured to process a signal of the flexible foldable display 14. Specifically, the display chip 15 may be disposed on the primary circuit board 112; or the display chip 15 may be disposed on the terminal bending portion 1412, to fully use space of the terminal bending portion 1412.

In embodiments of this application, types of the first signal transmission line 113 and the second signal transmission line 123 are not specifically limited. For example, the first signal transmission line 113 may be a flexible circuit board or a flexible cable. The second signal transmission line 123 may be a flexible circuit board or a flexible cable.

In addition, in embodiments of this application, a type of the mobile terminal 10 is not specifically limited. For example, the mobile terminal 10 may be a foldable mobile phone, a foldable tablet, or another display device.

## Claims

1. A mobile terminal (10), comprising a hinge assembly (13), a flexible foldable display (14), a first body (11), and a second body (12), wherein the flexible foldable display (13) comprises a first display (141) and a second display (142), and the first body (11) and the second body (12) are rotatably connected to the hinge assembly (13) separately, and are located on two sides of the hinge assembly (13);
the first body (11) comprises a first housing (111), a primary circuit board (112), a camera module (114), and a first signal transmission line (113), wherein the first housing (111) is connected to the first display (141), the primary circuit board (112) is provided with a central processing unit, the camera module (114) is electrically connected to the primary circuit board (112), the first display (141) is provided with a first camera hole (1411) corresponding to the camera module (114), and the first signal transmission line (113) is electrically connected to the primary circuit board (112) and the first display (141); and
the second body (12) comprises a second housing (121), a secondary circuit board, a battery (122), and a second signal transmission line (123), wherein the second housing (121) is connected to the second display (142), the secondary circuit board is provided with a speaker module, one end of the second signal transmission line (123) is electrically connected to the battery (122), and the other end of the second signal transmission line (123) passes through the hinge assembly (13) and is electrically connected to the primary circuit board (112), wherein
a side of the first display (141) is provided with a terminal bending portion (1412), and the terminal bending portion (1412) is bent toward the primary circuit board (112); and one end of the first signal transmission line (113) is electrically connected to the terminal bending portion (1412), and the other end of the first signal transmission line (113) is electrically connected to the primary circuit board (112).

2. The mobile terminal (10) according to claim 1, wherein the flexible foldable display (13) has a first outer edge and a second outer edge, the first outer edge is perpendicular to the hinge assembly (13), the second outer edge is parallel to the hinge assembly (13), and a ratio of a length of the first outer edge to a length of the second outer edge is greater than 2:1.

3. The mobile terminal (10) according to claim 1 or 2, wherein the primary circuit board (112) is further provided with a memory and a radio frequency module.

4. The mobile terminal (10) according to any one of claims 1 to 3, wherein the first display (141) has a first side away from the second display (142) and two second sides that are separately adjacent to the first side; and
the terminal bending portion (1412) is disposed on the first side, and the first camera hole (1411) is provided close to the second side.

5. The mobile terminal (10) according to claim 4, wherein the terminal bending portion (1412) is a bar-shaped bending portion, and the bar-shaped bending portion is connected to at least a part of the first side.

6. The mobile terminal (10) according to any one of claims 1 to 3, wherein the first display (141) has a first side away from the second display (142) and two second sides that are separately adjacent to the first side; and
the terminal bending portion (1412) is disposed on the first side, and the first camera hole (1411) is provided close to the first side; or the terminal bending portion (1412) is disposed on the second side, and the first camera hole (1411) is provided close to the second side.

7. The mobile terminal (10) according to claim 6, wherein the terminal bending portion (1412) is provided with a second camera hole, and the second camera hole is provided corresponding to the first camera hole (1411).

8. The mobile terminal (10) according to any one of claims 1 to 7, wherein the mobile terminal further comprises a display chip, and the display chip is disposed on the terminal bending portion (1412).

9. The mobile terminal (10) according to any one of claims 1 to 8, wherein the first signal transmission line (113) is a flexible circuit board or a flexible cable.

## Patentansprüche

1. Mobiles Endgerät (10), umfassend eine Scharnierbaugruppe (13), ein flexibles faltbares Display (14), einen ersten Körper (11) und einen zweiten Körper (12), wobei das flexible faltbare Display (13) ein erstes Display (141) und ein zweites Display (142) umfasst, und der erste Körper (11) und der zweite Körper (12) separat drehbar mit der Scharnierbaugruppe (13) verbunden sind und sich auf zwei Seiten der Scharnierbaugruppe (13) befinden;
der erste Körper (11) ein erstes Gehäuse (111), eine primäre Leiterplatte (112), ein Kameramodul (114) und eine erste Signalübertragungsleitung (113) umfasst, wobei das erste Gehäuse (111) mit dem ersten Display (141) verbunden ist, die primäre Leiterplatte (112) mit einer zentralen Verarbeitungseinheit versehen ist, das Kameramodul (114) elektrisch mit der primären Leiterplatte (112) verbunden ist, das erste Display (141) mit einem ersten Kameraloch (1411) entsprechend dem Kameramodul (114) versehen ist, und die erste Signalübertragungsleitung (113) elektrisch mit der primären Leiterplatte (112) und dem ersten Display (141) verbunden ist; und
der zweite Körper (12) ein zweites Gehäuse (121), eine sekundäre Leiterplatte, eine Batterie (122) und eine zweite Signalübertragungsleitung (123) umfasst, wobei das zweite Gehäuse (121) mit dem zweiten Display (142) verbunden ist, die sekundäre Leiterplatte mit einem Lautsprechermodul versehen ist, ein Ende der zweiten Signalübertragungsleitung (123) elektrisch mit der Batterie (122) verbunden ist und das andere Ende der zweiten Signalübertragungsleitung (123) durch die Scharnierbaugruppe (13) verläuft und elektrisch mit der primären Leiterplatte (112) verbunden ist, wobei
eine Seite des ersten Displays (141) mit einem Endgerätebiegeabschnitt (1412) versehen ist, und der Endgerätebiegeabschnitt (1412) zu der primären Leiterplatte (112) hin gebogen ist; und ein Ende der ersten Signalübertragungsleitung (113) elektrisch mit dem Endgerätebiegeabschnitt (1412) verbunden ist und das andere Ende der ersten Signalübertragungsleitung (113) elektrisch mit der primären Leiterplatte (112) verbunden ist.

2. Mobiles Endgerät (10) nach Anspruch 1, wobei das flexible faltbare Display (13) eine erste Außenkante und eine zweite Außenkante aufweist, die erste Außenkante senkrecht zu der Scharnierbaugruppe (13) verläuft, die zweite Außenkante parallel zu der Scharnierbaugruppe (13) verläuft und das Verhältnis einer Länge der ersten Außenkante zu einer Länge der zweiten Außenkante größer als 2:1 ist.

3. Mobiles Endgerät (10) nach Anspruch 1 oder 2, wobei die primäre Leiterplatte (112) ferner mit einem Speicher und einem Funkfrequenzmodul versehen ist.

4. Mobiles Endgerät (10) nach einem der Ansprüche 1 bis 3, wobei das erste Display (141) eine erste Seite, die von dem zweiten Display (142) entfernt ist, und zwei zweite Seiten aufweist, die separat benachbart an der ersten Seite liegen; und
der Endgerätebiegeabschnitt (1412) auf der ersten Seite angeordnet ist und das erste Kameraloch (1411) nahe der zweiten Seite bereitgestellt ist.

5. Mobiles Endgerät (10) nach Anspruch 4, wobei der Endgerätebiegeabschnitt (1412) ein stabförmiger Biegeabschnitt ist und der stabförmige Biegeabschnitt mit mindestens einem Teil der ersten Seite verbunden ist.

6. Mobiles Endgerät (10) nach einem der Ansprüche 1 bis 3, wobei das erste Display (141) eine erste Seite, die von dem zweiten Display (142) entfernt ist, und zwei zweite Seiten aufweist, die separat benachbart an der ersten Seite liegen; und
der Endgerätebiegeabschnitt (1412) auf der ersten Seite angeordnet ist und das erste Kameraloch (1411) nahe der ersten Seite bereitgestellt ist; oder der Endgerätebiegeabschnitt (1412) auf der zweiten Seite angeordnet ist und das erste Kameraloch (1411) nahe der zweiten Seite bereitgestellt ist.

7. Mobiles Endgerät (10) nach Anspruch 6, wobei der Endgerätebiegeabschnitt (1412) mit einem zweiten Kameraloch versehen ist und das zweite Kameraloch entsprechend dem ersten Kameraloch (1411) bereitgestellt ist.

8. Mobiles Endgerät (10) nach einem der Ansprüche 1 bis 7, wobei das mobile Endgerät ferner einen Displaychip umfasst und der Displaychip auf dem Endgerätebiegeabschnitt (1412) angeordnet ist.

9. Mobiles Endgerät (10) nach einem der Ansprüche 1 bis 8, wobei die erste Signalübertragungsleitung (113) eine flexible Leiterplatte oder ein flexibles Kabel ist.

## Revendications

1. Terminal mobile (10), comprenant un ensemble de charnière (13), un écran pliable flexible (14), un premier corps (11) et un second corps (12), dans lequel l'écran pliable flexible (13) comprend un premier écran (141) et un second écran (142), et le premier corps (11) et le second corps (12) sont reliés de manière rotative à l'ensemble de charnière (13) séparément, et sont situés sur deux côtés de l'ensemble de charnière (13) ;
le premier corps (11) comprend un premier boîtier (111), une carte de circuit imprimé primaire (112), un module caméra (114) et une première ligne de transmission de signal (113), dans lequel le premier boîtier (111) est relié au premier écran (141), la carte de circuit imprimé primaire (112) est dotée d'une unité centrale de traitement, le module caméra (114) est connecté électriquement à la carte de circuit imprimé primaire (112), le premier écran (141) est doté d'un premier orifice pour caméra (1411) correspondant au module caméra (114) et la première ligne de transmission de signal (113) est connectée électriquement à la carte de circuit imprimé primaire (112) et au premier écran (141) ; et
le second corps (12) comprend un second boîtier (121), une carte de circuit imprimé secondaire, une batterie (122), et une seconde ligne de transmission de signal (123), dans lequel le second boîtier (121) est relié au second écran (142), la carte de circuit imprimé secondaire est dotée d'un module haut-parleur, une extrémité de la seconde ligne de transmission de signal (123) est reliée électriquement à la batterie (122), et l'autre extrémité de la seconde ligne de transmission de signal (123) traverse l'ensemble de charnière (13) et est reliée électriquement à la carte de circuit imprimé primaire (112), dans lequel
un côté du premier écran (141) est doté d'une partie de courbure du terminal (1412), et la partie de courbure de terminal (1412) est courbée vers la carte de circuit imprimé primaire (112) ; et une extrémité de la première ligne de transmission de signal (113) est reliée électriquement à la partie de courbure de terminal (1412), et l'autre extrémité de la première ligne de transmission de signal (113) est reliée électriquement à la carte de circuit imprimé primaire (112).

2. Terminal mobile (10) selon la revendication 1, dans lequel l'écran pliable flexible (13) a un premier bord extérieur et un second bord extérieur, le premier bord extérieur est perpendiculaire à l'ensemble de charnière (13), le second bord extérieur est parallèle à l'ensemble de charnière (13), et le rapport de la longueur du premier bord extérieur à la longueur du second bord extérieur est supérieur à 2:1.

3. Terminal mobile (10) selon la revendication 1 ou 2, dans lequel la carte de circuit imprimé primaire (112) est en outre dotée d'une mémoire et d'un module de radiofréquence.

4. Terminal mobile (10) selon l'une quelconque des revendications 1 à 3, dans lequel le premier écran (141) a un premier côté éloigné du second écran (142) et deux seconds côtés qui sont séparément adjacents au premier côté ; et
la partie de courbure du terminal (1412) est disposée sur le premier côté, et le premier orifice de caméra (1411) est prévu près du second côté.

5. Terminal mobile (10) selon la revendication 4, dans lequel la partie de courbure du terminal (1412) est une partie de courbure en forme de barre, et la partie de courbure en forme de barre est reliée à au moins une partie du premier côté.

6. Terminal mobile (10) selon l'une quelconque des revendications 1 à 3, dans lequel le premier écran (141) a un premier côté éloigné du second écran (142) et deux seconds côtés qui sont séparément adjacents au premier côté ; et
la partie de courbure de terminal (1412) est disposée sur le premier côté, et le premier orifice de caméra (1411) est prévu près du premier côté ; ou la partie de courbure de terminal (1412) est disposée sur le second côté, et le premier orifice de caméra (1411) est prévu près du second côté.

7. Terminal mobile (10) selon la revendication 6, dans lequel la partie de courbure du terminal (1412) est dotée d'un second orifice de caméra, et le second orifice de caméra est prévu en correspondance avec le premier orifice de caméra (1411).

8. Terminal mobile (10) selon l'une quelconque des revendications 1 à 7, dans lequel le terminal mobile comprend en outre une puce d'affichage, et la puce d'affichage est disposée sur la partie de courbure du terminal (1412).

9. Terminal mobile (10) selon l'une quelconque des revendications 1 à 8, dans lequel la première ligne de transmission de signal (113) est une carte de circuit imprimé flexible ou un câble flexible.
